# EUROPÄISCHE PATENTANMELDUNG

(11) **EP 0 745 359 A1**
(43) Veröffentlichungstag der Anmeldung: **04.12.1996**
(21) Anmeldenummer: 96108141.1
(22) Anmeldetag: 22.05.1996
(51) Int. Cl.: A61C 9/00

(54) **Verfahren zur Herstellung eines zahntechnischen Modells sowie Halteelement, Modellsockelplatte, Positionierplatte und Haltesysteme zu seiner Durchführung**

(30) Priorität: 02.06.1995 CH 1620/95
(71) Anmelder: MIKRONA TECHNOLOGIE AG, 8957 Spreitenbach (CH)
(72) Erfinder: Nowak, Claude, 5430 Wettingen (CH)
(74) Vertreter: Wagner, Wolfgang, Dr. Phil., Dipl.-Phys.

(57) **Zusammenfassung**

Eine Modellsockelplatte (1) aus Kunststoff für die Herstellung eines zahntechnischen Arbeitsmodells weist Ausnehmungen (2) für die Aufnahme von Halteelementen (3) auf mit jeweils zwei quer zur Richtung des Kieferbogens einander gegenüberliegenden, von unten nach oben auseinanderlaufenden nischenartigen Anlagebereichen (4), welche jeweils seitlich von zwei zur Mitte der Ausnehmung (2) hin auseinanderlaufenden Anlageflächen (6a) begrenzt werden. Die einstückig aus rostfreiem Stahl hergestellten Halteelemente (3) weisen jeweils zwei starre Schenkel (8, 9) auf, welche durch ein von ihren Enden jeweils beabstandet ansetzendes Zwischenstück (10) elastisch schwenkbar verbunden sind und an den Aussenseiten zur Kontaktierung der Anlagebereiche (4) Kontaktbereiche (11) mit Kontaktflächen (13b) aufweisen. Die Schenkel (8, 9) laufen entsprechend den Anlagebereichen (4) von unten nach oben auseinander und schliessen einen Winkel von ca. 10° ein. Sie werden bei der Herstellung des Arbeitsmodells durch Gussmasse in ihrer gegenseitigen Lage unverschwenkbar fixiert.

## Beschreibung

Die Erfindung betrifft ein Verfahren zur Herstellung eines zahntechnischen Modells entsprechend dem Oberbegriff des Anspruchs 1 sowie ein Halteelement, eine Modellsockelplatte, eine Positionierplatte und Haltesysteme zu seiner Durchführung.

Es sind seit langem verschiedene gattungsgemässe Verfahren zur Herstellung zahntechnischer Modelle, sogenannter Sägeschnittmodelle bekannt, die aber durchwegs entweder hohen Präzisionsanforderungen nicht genügen oder aufwendig und teuer sind, weil diverse zu ihrer Durchführung erforderliche Komponenten nicht oder nur beschränkt wiederverwendbar sind.

In der WO-A-93/24 073 ist ein derartiges Verfahren angesprochen, bei welchem ein Halteelement zwei von einem Träger nach unten weisende Schenkel aufweist, von denen einer elastisch deformierbar ist. Die Modellsockelplatte ist mit Ausnehmungen für die Halteelemente versehen, welche sich nach unten erweitern, so dass die Halteelemente in sie eingeschnappt werden können. Ein derartiges System vermag jedoch höhere Anforderungen bezüglich der Präzision der Positionierung der Halteelemente nicht zu erfüllen. Insbesondere ist die Reproduzierbarkeit der Position der Halteelemente bei Entnahme und Wiedereinsetzen ungenügend. Ausserdem ist das Einsetzen wie das Entfernen verhältnismässig unbequem.

Die EP-A-0 528 335 betrifft ein weiteres gattungsgemässes Verfahren, bei welchem dolchartige Halteelemente aus Metall in trichterförmige Ausnehmungen in einer Modellsockelplatte aus warmverformbarem Material eingesetzt werden, nachdem sie oder die Platte auf die Verformungstemperatur derselben erwärmt wurden. Dabei dienen seitliche Arme der Halteelemente, welche etwas in die Oberseite der Modellsockelplatte eindringen, als Tiefenanschlag beim Einsetzen. Abgesehen davon, dass die Halteelemente u. U. nicht hinreichend fest und genau in der Modellsockelplatte verankert sind, wird die Modellsockelplatte bei dieser Lösung permanent deformiert, was ihrer Wiederverwendbarkeit Grenzen setzt.

Der Erfindung liegt die Aufgabe zugrunde, ein gattungsgemässes Verfahren anzugeben, welches die Herstellung hochpräziser zahntechnischer Modelle erlaubt, insbesondere eine präzise Reproduzierbarkeit der Position von Teilen des Modells, die von einem oder mehreren Halteelementen getragen werden, auf der Modellsockelplatte. Ausserdem soll die Modellsockelplatte im wesentlichen unbeschränkt wiederverwendet werden können.

Weiterhin sollen durch die Erfindung für die Durchführung des Verfahrens besonders geeignete Komponenten geschaffen werden, insbesondere ein geeignetes Halteelement, eine geeignete Modellsockelplatte und eine die Durchführung des Verfahrens erleichternde Positionierplatte. Ausserdem werden solche Komponenten umfassende Haltesysteme angegeben, in denen die ersteren in besonders günstiger Weise aufeinander abgestimmt sind.

Diese Aufgabe wird durch die Erfindung, wie sie in den Ansprüchen gekennzeichnet ist, gelöst. Das angegebene Verfahren erlaubt die Verwendung von Halteelementen, welche sich, etwa zum Ausgleich von Fertigungstoleranzen, der Ausnehmung der Modellsockelplatte beim Einsetzen in dieselbe beschränkt anzupassen vermögen, beim fertiggestellten Modell jedoch fixiert sind. Auf diese Weise kann ein präzises, reproduzierbares Einsetzen in die Modellsockelplatte gewährleistet werden. Entnahme und Einsetzen der Modellteile sind leicht und mit geringem Kraftaufwand durchführbar.

Das erfindungsgemässe Halteelement bietet die erwähnte Möglichkeit der Anpassung an die gegebene Form der Ausnehmung bei ausreichend präzisem Sitz in derselben.

Die erfindungsgemässe Modellsockelplatte gewährleistet einen präzisen, gut reproduzierbaren Sitz des Halteelements.

Die erfindungsgemässe Positionierungsplatte schliesslich erleichtert die Durchführung des erfindungsgemässen Verfahrens wesentlich.

In den angegebenen Haltesystemen sind die einzelnen Komponenten in besonders günstiger Weise aufeinander abgestimmt.

Im folgenden wird die Erfindung anhand von Figuren, welche lediglich ein Ausführungsbeispiel zeigen, näher erläutert. Es zeigen
- Fig. 1: eine schräge Draufsicht auf eine Modellsockelplatte,
- Fig. 2: eine Seitenansicht eines Halteelements,
- Fig. 3: einen Schnitt durch einen Teil einer Modellsockelplatte mit eingesetztem Halteelement,
- Fig. 4: eine Draufsicht auf einen Ausschnitt der Modellsockelplatte mit einem eingesetzten Halteelement,
- Fig. 5: vergrössert einen Schnitt längs V-V in Fig. 3 und
- Fig. 6: eine Positionierplatte.

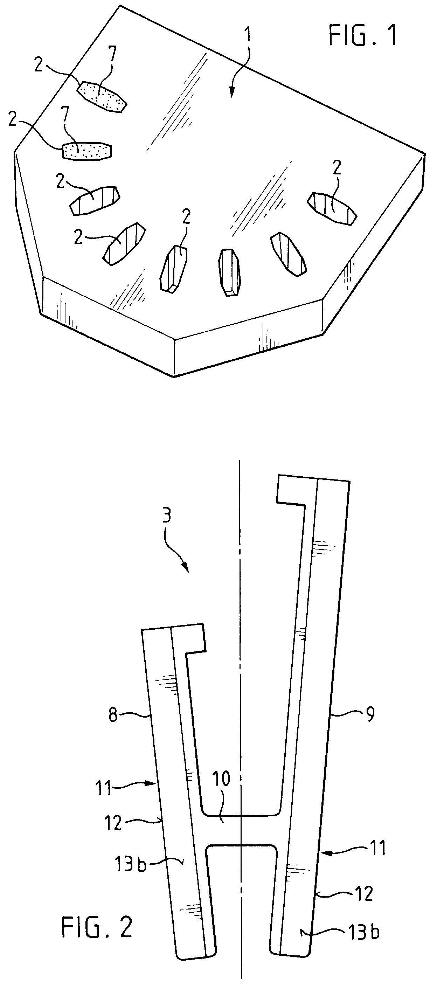

Eine Modellsockelplatte 1 (Fig. 1) weist längs einer dem Verlauf eines menschlichen Kieferbogens folgenden Linie angeordnete Ausnehmungen 2 zur Aufnahme von Halteelementen 3 auf, wie sie in Fig. 2 dargestellt sind. Die Modellsockelplatte 1 besteht vorzugsweise aus Kunststoff, z. B. PETP und kann zur Erhöhung der Steifigkeit glasfaserverstärkt sein. Die durchgehenden Ausnehmungen 2 erweitern sich von unten nach oben quer zur obengenannten Linie, so dass einander gegenüberliegende Anlagebereiche 4 (Fig. 4) gegen die Oberseite der Modellsockelplatte 1 hin auseinanderlaufen. Sie schliessen einen Winkel von ca. 10° ein. Jeder der Anlagebereiche 4 wird von einer leicht nach aussen geneigten ebenen Rückwand 5 gebildet sowie von an dieselbe beidseits anschliessenden leicht nach aussen geneigten ebenen Anlageflächen 6a,b, welche gegen die Mitte der Ausnehmung 2 hin leicht auseinanderlaufen. Der Anlagebereich 4 bildet so eine Nische mit über seine Länge konstantem trapezförmigem Querschnitt.

Die Ausnehmungen 2 sind gewöhnlich durch Stopfen 7, etwa aus einem weichen Kunststoffmaterial, z. B. Schaumstoff, verschlossen, die das Eindringen von Gussmasse in leere Ausnehmungen 2 verhindern und beim Einsetzen eines Halteelements 3 nach unten gestossen werden. Es kann auch eine in die Oberseite der Modellsockelplatte 1 eingesenkte, die Ausnehmungen 2 verbindende bogenförmige Nut vorgesehen sein, in welche zum gleichen Zweck ein Streifen aus weichem Material eingelegt wird.

Es ist auch eine abweichende Ausführungsform der Modellsockelplatte möglich, bei welcher die Ausnehmungen durch einen bogenförmigen Durchbruch verbunden sind, so dass sie nur Paare einander gegenüberliegender nischenartiger Vertiefungen in den Seitenwänden desselben bilden. Eine derartige Ausführung ist jedoch schon bezüglich ihrer Festigkeit ungünstiger als die oben beschriebene.

Das einstückige Halteelement 3 weist zwei in einer Ebene liegende, im wesentlichen starre Schenkel, einen kürzeren Schenkel 8 und einen längeren Schenkel 9, auf, die durch ein Zwischenstück 10 verbunden sind. Das Zwischenstück 10 weist rechteckigen Querschnitt auf und greift an jedem der Schenkel 8, 9 an einem Ansatzpunkt an, welcher von den Enden desselben beabstandet ist. Das Halteelement 3 ist, vom Längenunterschied der oberhalb des Zwischenstücks 10 liegenden Abschnitte der Schenkel 8, 9 abgesehen, bezüglich einer das Zwischenstücks 10 schneidenden Mittelebene symmetrisch ausgebildet. Insbesondere ist der Abstand des Ansatzpunkts vom unteren Ende bei beiden Schenkeln gleich gross, beim kürzeren entspricht er etwa einem Drittel der Gesamtlänge, beim längeren etwa einem Viertel. An den oberen Enden sind beide Schenkel hakenartig um ca. 90° nach innen abgewinkelt.

Das Zwischenstück 10 ist geringfügig elastisch verbiegbar, aber in der Länge im wesentlichen unveränderlich, so dass es ein Gelenk bildet, um welches die Schenkel 8, 9 elastisch geringfügig gegeneinander verschwenkbar sind, während der Abstand zwischen den Ansatzpunkten des Zwischenstücks 10 an den Schenkeln 8, 9 praktisch unveränderlich ist. In der Grundstellung, d. h. ohne elastische Deformation des Zwischenstücks 10, laufen die Schenkel 8, 9 von unten nach oben auseinander. Sie schliessen einen Winkel von ca. 10° ein.

Jeder der Schenkel 8, 9 weist an der Aussenseite einen Kontaktbereich 11 mit über die Länge des Schenkels konstantem etwa trapezförmigem Querschnitt auf, mit einer ebenen Rückenfläche 12 und beidseits an dieselbe anschliessenden ebenen Kontaktflächen 13a,b, welche gegen die Mitte des Halteelements 3 hin leicht auseinanderlaufen.

Das Material des Halteelements 3 soll einen hohen Elastizitätsmodul aufweisen, so dass trotz der verhältnismässig geringen Flächenträgheitsmomente die Schenkel 8, 9 praktisch starr sind und auch das geringeren Querschnitt aufweisende Zwischenstück 10 elastischen Deformationen einen verhältnismässig grossen Widerstand entgegensetzt. Sehr geeignet ist z. B. rostfreier Stahl nach DIN 1.4305.

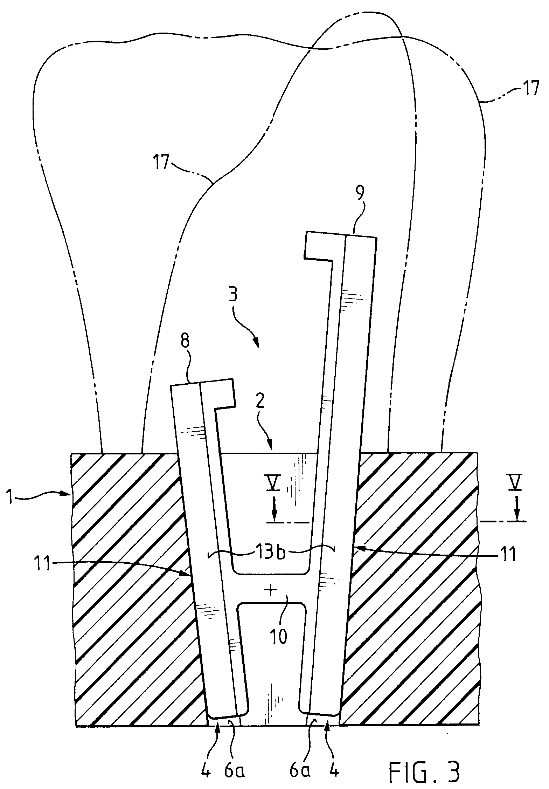

Wird nun das Halteelement 3 in eine der Ausnehmungen 2 eingesetzt (Fig. 3-5), so erreichen die unteren Enden der Schenkel 8, 9 das untere Ende der Ausnehmung nicht ganz. Das Zwischenstück 10 liegt etwa auf mittlerer Höhe des in die Ausnehmung ragenden Teils des Halteelements 3. Sein Eindringen in die Ausnehmung 2 wird dabei nicht durch einen eigentlichen Tiefenanschlag begrenzt, sondern dadurch, dass sich die Ausnehmung 2 nach unten verengt. Sowohl die Anlagebereiche 4 der Ausnehmung 2 als auch die Kontaktbereiche 11 des Halteelements 3 laufen ja nach oben etwas auseinander. Dabei werden die auf der Höhe des Zwischenstücks 10, d. h. etwa in mittlerer Höhe in der Ausnehmung 2 liegenden Abschnitte der Kontaktbereiche 11 durch dasselbe in einem im wesentlichen festen Abstand gehalten, welcher die vertikale Lage des Halteelements 3 genau fixiert. Daneben sind die Schenkel 8, 9 um besagte Abschnitte etwas schwenkbar, so dass sie sich beim Einsetzen zum Ausgleich von Fertigungstoleranzen derart an die Ausnehmung 2 anpassen können, dass ihre Kontaktbereiche 11 an den Anlagebereichen 4 der Ausnehmung 2 über deren ganze Länge satt anliegen.

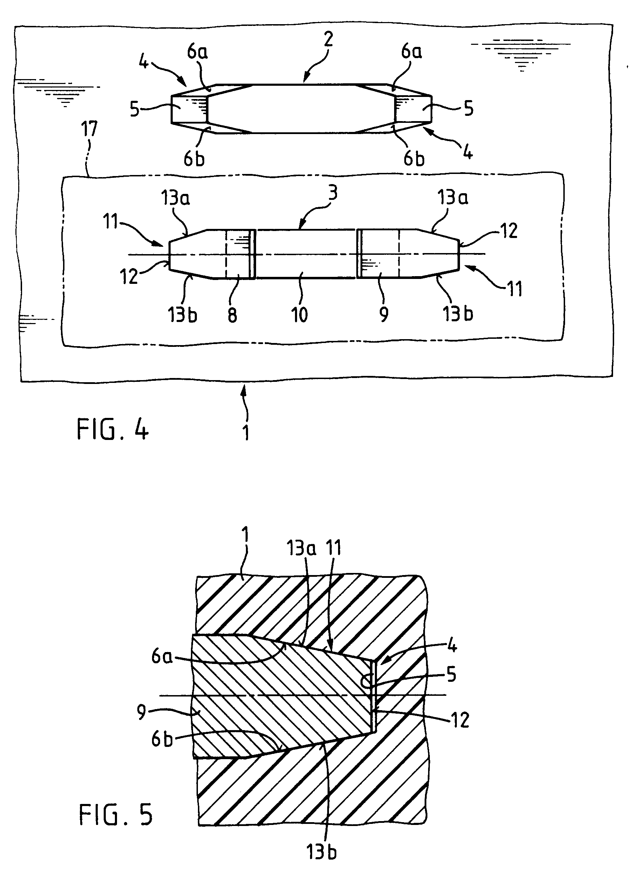

Die Kontaktbereiche 11 sind auf die Anlagebereiche 4 derart abgestimmt, dass (Fig. 5) die Rückenfläche 12 nicht an der Rückwand 5 anliegt, sondern, da sie geringfügig breiter ist als diese, von ihr durch einen schmalen Spalt getrennt ist. Der Anschlag wird durch die Anlageflächen 6a,b einerseits und die Kontaktflächen 13a,b andererseits gebildet, die jeweils sowohl von unten nach oben als auch von aussen nach innen leicht auseinander laufen. Das Halteelement 3 wird auf diese Weise vertikal und lateral sicher fixiert. Es steht mit der Wand der Ausnehmung 2 auf verhältnismässig grosser Fläche in Kontakt, so dass keine hohe Flächenpressung auftritt und Materialdeformationen entsprechend gering bleiben.

Der Winkel zwischen den Kontaktbereichen 11 der beiden Schenkeln 8, 9 des Halteelements 3 und der demselben entsprechende Winkel zwischen den Anlagebereichen 4 der Ausnehmung 2 sowie der Winkel zwischen den Kontaktflächen 13a,b jedes Kontaktbereichs 11 und der entsprechende Winkel zwischen den Anlageflächen 6a,b jedes Anlagebereichs 4 sind derart auf den Reibungskoeffizienten zwischen dem Halteelement 3 und der Modellsockelplatte 1 abgestimmt, dass sowohl in vertikaler Richtung wie auch nach innen zur Mitte der Ausnehmung 2 hin eine leichte Selbsthemmung besteht. Dies verbessert die Sicherheit, mit der das Halteelement 3 in der Ausnehmung 2 festgehalten wird, ohne doch das Einsetzen und Herausnehmen des ersteren zu erschweren. Der erstgenannte der besagten Winkel, der im Ausführungsbeispiel wie erwähnt ca. 10° beträgt, ist >0° und kann insbesondere zwischen 2° und 90°, vorzugsweise zwischen 5° und 60° liegen.

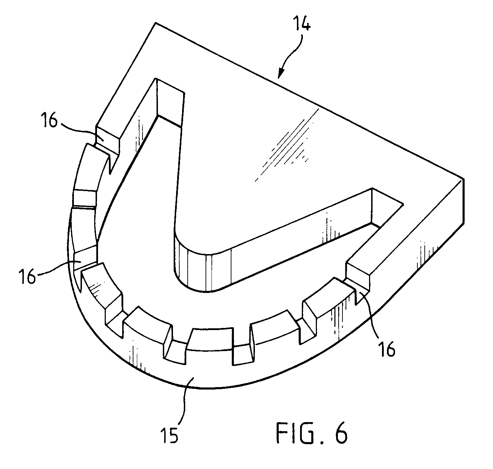

Eine Positionierplatte 14 (Fig. 6) entspricht in ihren Abmessungen der Modellsockelplatte 1. Sie weist einen Bügel 15 auf, der der Linie, entlang welcher die Ausnehmungen 2 angeordnet sind, folgt und an der Oberseite den Positionen der Ausnehmungen 2 entsprechend angeordnete Kerben 16 trägt.

Zur Herstellung eines zahntechnischen Modells wird im Mund des Patienten ein Abdruck eines Kiefers oder Kieferteils in einer Silikonmasse hergestellt und auf eine Basisplatte gesetzt. Oberhalb des Abgusses wird die Positionierplatte 14 angeordnet. Auf dieselbe werden nun Halteelemente 3 derart aufgesteckt, dass ihre Zwischenstücke 10 in Kerben 16 zu liegen kommen und das obere Ende des längeren Schenkels 9 jeweils nach unten auf das Zentrum eines Zahnabdrucks weist. Je nach Kiefergrösse und Zahnposition kann dabei der längere Schenkel 9 an der Innenseite oder an der Aussenseite des Bügels 15 liegen.

Anschliessend wird die Modellsockelplatte 1 mit der Oberseite nach unten auf die Positionierplatte 14 aufgesteckt, die beiden Platten zusammen abgenommen und gekehrt und schliesslich die Halteelemente 3 unter Beibehaltung ihrer relativen Positionen auf die Modellsockelplatte 1 übertragen, indem jedes einzelne mittels eines stiftartigen Einstossers in eine seiner Position entsprechende Ausnehmung 2 derselben gestossen wird. Zur Verbesserung der Haftung der Halteelemente 3 in der Modellsockelplatte 1 können die ersteren oder auch die letztere vorgängig auf eine Verformungstemperatur der Modellsockelplatte 1 angewärmt werden. Schliesslich wird die Positionierplatte 14 abgenommen.

Der Abdruck wird nun mit einer Gipsmasse als Gussmasse gefüllt und die Modellsockelplatte 1 wiederum gekehrt und an die Gipsmasse angedrückt, so dass jeweils beide Schenkel 8, 9 jedes Halteelements 3 mit ihren oberen Endbereichen in derselben eingebettet sind. Durch die Stopfen 7 wird verhindert, dass dabei Gipsmasse in leere Ausnehmungen 2 dringt. Die Halteelemente 3 tragenden Ausnehmungen 2 werden durch dieselben fast vollständig verschlossen, so dass auch hier Gipsmasse nicht weiter eindringen kann. Anschliessend wird die Gipsmasse ausgehärtet.

Das so gebildete Arbeitsmodell wird vom Abdruck gelöst und schliesslich durch einen leichten Schlag auch von der Modellsockelplatte 1. Die Schenkel 8, 9 eines jeden Halteelements 3 sind jeweils so weit in das Arbeitsmodell eingegossen, dass sie in ihrer gegenseitige Lage unverschwenkbar fixiert sind. Das Arbeitsmodell kann nun derart zersägt werden, dass jeder Teil mindestens ein Halteelement 3 enthält. Insbesondere kann jedes Halteelement ein Zahnmodell 17 (Fig. 3, 4) tragen. Die Teile können einzeln bearbeitet und dank der Halteelemente 3 sehr präzise in die Modellsockelplatte 1 wieder eingesetzt werden.

## Patentansprüche

1. Verfahren zur Herstellung eines zahntechnischen Arbeitsmodells, bei welchem
- ein Abdruck eines Kiefers oder Kieferteils erstellt wird,
- der Abdruck mit Gussmasse gefüllt wird,
- in einer Modellsockelplatte (1) Halteelemente (3) entfernbar angeordnet werden,
- die Modellsockelplatte (1) an die Gussmasse angedrückt wird, so dass die Halteelemente (3) jeweils mindestens teilweise in dieselbe eindringen,
- die Gussmasse zu einem Arbeitsmodell ausgehärtet wird,
- das Arbeitsmodell vom Abguss getrennt und von der Modellsockelplatte (1) gelöst wird,
**dadurch gekennzeichnet, dass** die Halteelemente (3) jeweils aus mindestens zwei gegeneinander beweglichen Teilen bestehen und dass beide Teile eines jeden Halteelements (3) so weit in die Gussmasse eingebettet werden, dass ihre gegenteilige Lage nach dem Aushärten derselben fixiert ist.

2. Verfahren nach Anspruch 1, **dadurch gekennzeichnet, dass** zur Anordnung der Halteelemente (3) auf der Modellsockelplatte (1)
- eine Positionierplatte (14) über dem Abdruck angeordnet wird,
- die Halteelemente (3) auf die Oberseite der Positionierplatte (14) aufgesteckt werden,
- die Positionierplatte (14) derart mit der Modellsockelplatte (1) zusammengesetzt wird, dass deren Oberseite ihr zugewandt ist und
- die Halteelemente (3) unter Beibehaltung ihrer relativen Positionen auf die Modellsockelplatte (1) übertragen werden.

3. Verfahren nach Anspruch 2, **dadurch gekennzeichnet, dass** die Uebertragung der Halteelemente (3) einzeln durch Andrücken an die Modellsockelplatte (1) erfolgt.

4. Halteelement zur Durchführung des Verfahrens nach einem der Ansprüche 1 bis 3, mit zwei miteinander verbundenen Schenkeln (8, 9), deren jeder an seiner dem anderen Schenkel abgewandten Aussenseite einen Kontaktbereich (11) aufweist, **dadurch gekennzeichnet, dass** die Verbindung zwischen den Schenkeln (8, 9) durch mindestens ein Zwischenstück (10) hergestellt ist, welches an jedem der Schenkel (8, 9) zwischen den freien Enden desselben angreift und dass sie derart ausgebildet ist, dass die Schenkel (8, 9) zur Einstellung der gegenseitigen Lage ihrer Kontaktbereiche (11) gegeneinander bewegbar sind.

5. Halteelement nach Anspruch 4, **dadurch gekennzeichnet, dass** die Schenkel (8, 9) starr ausgebildet und die Verbindung zwischen denselben elastisch ist.

6. Halteelement nach Anspruch 4 oder 5, **dadurch gekennzeichnet, dass** die Schenkel (8, 9) in einer Ebene liegen und einen Winkel >0° einschliessen, so dass sie von unteren Enden, wo ihr Abstand minimal ist, ausgehend auseinanderlaufen.

7. Halteelement nach Anspruch 6, **dadurch gekennzeichnet, dass** der von den Schenkeln (8, 9) eingeschlossene Winkel zwischen 2° und 90° beträgt.

8. Halteelement nach Anspruch 7, **dadurch gekennzeichnet, dass** der von den Schenkeln (8, 9) eingeschlossene Winkel zwischen 5° und 60° beträgt.

9. Halteelement nach einem der Ansprüche 6 bis 8, **dadurch gekennzeichnet, dass** das Zwischenstück (10) näher bei den unteren Enden der Schenkel (8, 9) angreift.

10. Halteelement nach einem der Ansprüche 4 bis 9, **dadurch gekennzeichnet, dass** die Schenkel (8, 9) ungleich lang sind.

11. Halteelement nach einem der Ansprüchen 6 bis 10, **dadurch gekennzeichnet, dass** die jeweils zwischen dem unteren Ende und dem Ansatz des Zwischenstücks (10) liegenden unteren Abschnitte der Schenkel (8, 9) etwa gleich lang sind.

12. Halteelement nach einem der Ansprüche 4 bis 11, **dadurch gekennzeichnet, dass** bei mindestens einem der Schenkel (8, 9) der Kontaktbereich (11) zwei seitliche Kontaktflächen (13a, 13b) umfasst, welche nach innen auseinanderlaufen.

13. Halteelement nach einem der Ansprüche 4 bis 12, **dadurch gekennzeichnet, dass** mindestens einer der Schenkel (8, 9) im Bereich seines oberen Endes hakenartig ausgebildet ist.

14. Modellsockelplatte zur Durchführung des Verfahrens nach einem der Ansprüche 1 bis 3, mit einer Reihe von Ausnehmungen (2), welche längs einer einem menschlichen Kieferbogen oder einem Teil eines solchen folgenden Linie angeordnet sind, wobei in den Ausnehmungen (2) jeweils zwei einander quer zur besagten Linie gegenüberliegende Anlagebereiche (4) vorgesehen sind, **dadurch gekennzeichnet, dass** mindestens ein Anlagebereich (4) seitlich von zwei Anlageflächen (6a, 6b) begrenzt ist, welche gegen die Mitte der Ausnehmung (2) zu auseinanderlaufen.

15. Modellsockelplatte nach Anspruch 14, **dadurch gekennzeichnet, dass** die gegenüberliegenden Anlagebereiche (4) von einer Unterseite der Modellsockelplatte (1) zu einer Oberseite derselben hin auseinanderlaufen.

16. Modellsockelplatte nach Anspruch 14 oder 15, **dadurch gekennzeichnet, dass** die Ausnehmungen (2) mindestens teilweise bis zur Unterseite der Modellsockelplatte (1) durchgehend ausgebildet sind und an der Oberseite abgedeckt, insbesondere von entfernbaren Stopfen verschlossen sind.

17. Positionierplatte zur Durchführung des Verfahrens nach Anspruch 2 oder 3, **dadurch gekennzeichnet, dass** sie einen der Linie eines menschlichen Kieferbogens oder eines Teils eines solchen folgenden Bügel (15) umfasst, welcher an seiner Oberseite aufeinanderfolgende Kerben (16) aufweist.

18. Haltesystem zur Herstellung eines zahntechnischen Arbeitsmodells mit einer Modellsockelplatte nach einem der Ansprüche 14 bis 16 und mindestens einem Halteelement (3) nach einem der Ansprüche 4 bis 13 zum lösbaren Einsetzen in eine Ausnehmung (2) der Modellsockelplatte (1), **dadurch gekennzeichnet, dass** bei eingesetztem Halteelement (3) das Zwischenstück (10) sich etwa auf mittlerer Höhe des in die Modellsockelplatte (1) ragenden Teils des Halteelements (3) befindet.

19. Haltesystem zur Herstellung eines zahntechnischen Arbeitsmodells mit einer Modellsockelplatte nach Anspruch 15 oder 16 und mindestens einem Halteelement nach einem der Ansprüche 6 bis 13 zum lösbaren Einsetzen in eine Ausnehmung (2) der Modellsockelplatte (1), **dadurch gekennzeichnet, dass** der Winkel zwischen den Schenkeln (8, 9) des Halteelements (3) und der Winkel zwischen den Anlagebereichen (4) der Ausnehmung (2) einander jeweils entsprechen.

20. Haltesystem zur Herstellung eines zahntechnischen Arbeitsmodells mit einer Modellsockelplatte nach einem der Ansprüche 14 bis 16 und mindestens einem Halteelement nach Anspruch 12 zum lösbaren Einsetzen in die Modellsockelplatte, **dadurch gekennzeichnet, dass** die gegenseitige Lage der Anlageflächen (6a, 6b) eines Anlagebereichs (4) und der Kontaktflächen (13a, 13b) eines Schenkels (8; 9) einander jeweils entsprechen.

21. Haltesystem nach Anspruch 20, **dadurch gekennzeichnet, dass** der Winkel zwischen den Anlageflächen (6a, 6b) so auf den Reibungskoeffizienten zwischen den Materialien der Modellsockelplatte (1) und des Halteelements (3) abgestimmt ist, dass Selbsthemmung eintritt.

22. Haltesystem zur Herstellung eines zahntechnischen Arbeitsmodells mit einer Modellsockelplatte nach Anspruch 15 oder 16 und mindestens einem Halteelement nach einem der Ansprüche 6 bis 13 zum lösbaren Einsetzen in eine Ausnehmung (2) der Modellsockelplatte (1) sowie mit einer Positionierplatte (14) nach Anspruch 17, **dadurch gekennzeichnet, dass** die Positionen der Kerben (16) am Bügel (15) der Positionierplatte (14) denjenigen der Ausnehmungen (2) der Modellsockelplatte (1) entsprechen.
